Europäisches Patentamt

European Patent Office

Office européen des brevets

(19)

(11) Veröffentlichungsnummer: **0 200 098**
A2

(12) # EUROPÄISCHE PATENTANMELDUNG

(21) Anmeldenummer: 86105268.6

(22) Anmeldetag: 16.04.86

(51) Int. Cl.⁴: **B 23 K 26/00**
B 23 K 31/02, B 21 D 51/26
B 65 D 6/32

(30) Priorität: 22.04.85 DE 3514519
10.01.86 DE 3600532

(43) Veröffentlichungstag der Anmeldung:
05.11.86 Patentblatt 86/45

(84) Benannte Vertragsstaaten:
AT BE CH DE FR GB IT LI LU NL SE

(71) Anmelder: Karl Huber Verpackungswerke GmbH + Co.
Hohenlohestrasse 2
D-7110 Öhringen(DE)

(72) Erfinder: Mühlthaler, Axel, Dipl.-Ing.
Alemannenstrasse 9
D-7110 Öhringen(DE)

(72) Erfinder: Hauser, Werner
Karl-Huber-Strasse 19
D-7110 Öhringen(DE)

(72) Erfinder: Kögel, Hermann
Rotdornweg 4
D-7110 Öhringen(DE)

(72) Erfinder: Gutmann, Hans
Winzerweg 15
D-7110 Öhringen-Michelbach(DE)

(74) Vertreter: Flügel, Otto, Dipl.-Ing. et al,
Dipl.-Ing. Otto Flügel Dipl.-Ing. Manfred Säger
Patentanwälte Cosimastrasse 81 Postfach 810 540
D-8000 München 81(DE)

(54) Verfahren zur Herstellung eines Behälters aus dünnem Blech, wie dünnerem Feinblech und/oder Feinstblech.

(57) Verfahren zur Herstellung eines Behälters aus dünnem Blech, wie dünnerem Feinblech und/oder Feinstblech, der aus wenigstens zwei Teilen - beispielsweise Rumpf und Unter- und/oder Oberboden eines dosen- oder kanisterförmigen Behälters - besteht, die mit ihren zu verbindenden Randbereichen unter Bildung eines zumindest teilweise ungerade verlaufenden Verbindungsbereiches zusammengeführt und dort dicht und stoßfest miteinander verbunden werden und zwar derart, daß die Randbereiche der Teile über den Verbindungsbereich hinweg mit Hilfe wenigstens eines Energiestrahles, insbesondere Laserstrahles, bis zur Schmelze des Bleches nahtförmig aufgeheizt und dadurch ohne Zufuhr weiteren Schweißmittels miteinander verschweißt werden, um einen Behälter der in Rede stehenden Art leichtgewichtiger bzw. stabiler und ohne eigenständige Dichtungsmaßnahmen auch in gelackten Verbindungsbereichen zuverlässig dicht herstellen zu können.

1

Die Erfindung betrifft ein Verfahren zur Herstellung eines Behälters aus besonders dünnem Blech, vor allem dünnerem Feinblech und/oder Feinstblech, mit den Merkmalen des Oberbegriffes des Anspruches 1; sie betrifft ferner einen Behälter, der unter Anwendung dieses Verfahrens hergestellt ist, und eine Vorrichtung zur Durchführung des Verfahrens zur Herstellung eines solchen Behälters.

Bei den hier infrage stehenden Behältern aus dünnerem Feinblech und/oder vor allem auch Feinstblech werden zwei oder mehrere Teile durch Falzen miteinander verbunden; lediglich die Verbindung zum Insichschließen des Rumpfmantelbleches vor dem Falzen wird in Form einer geradlinig verlaufenden Widerstandsschweißnaht ausgeführt, was wegen der Zugänglichkeit keine besonderen Probleme bereitet. Dafür ist es allerdings erforderlich, isolierende Lackschichten im Schweißbereich zu entfernen bzw. entsprechende lackfreie Bereiche freizulassen.

Die zwischen den Teilen des Behälters - bei dosen- oder kanisterförmigen Behältern zwischen Rumpfteil und Unter- und/oder Oberbodenteil - vorgesehenen Falzverbindungen müssen zwei Hauptforderungen erfüllen, nämlich zum einen diejenige der Stabilität des Formschlusses zwischen den Teilen auch bei dynamischer Beanspruchung, wie sie beim Aufschlag nach einem Fall des gefüllten Behälters auftritt, und zum anderen diejenige nach der je nach Füllgut zu fordernden Dichtheit der Falzverbindung, und zwar auch nach einer Fallbeanspruchung.

Die mechanische Höchstbelastung der Falzverbindung bei Aufstoß auf einen entsprechenden Eckbereich des Behälters diktiert die Mindestblechstärke, die für den Behälter ein-

Dipl.-Ing. Otto Flügel, Dipl.-Ing. Manfred Säger, Patentanwälte, Cosimastr. 81, D-8 München 81

-2-

gesetzt werden muß. Aufgrund dieser Maßgabe ist der Behälter demnach aufwendiger und schwerer ausgebildet, als er dies aufgrund übriger Belastungen der Behälterwandung durch das Füllgut beispielsweise sein müßte. Dabei darf auch nicht der Blechzuschnitt über die eigentliche Behälterwandungsabmessung hinaus vernachlässigt werden, der für die Bildung der Falzverbindung vorgesehen werden muß.

Um die vorerwähnte Dichtigkeit der Falzverbindung zu erreichen, werden in den Falz gesonderte Dichtmaterialien eingelegt, oder die Blechbereiche innerhalb des Falzes werden zumindest teilweise durch Löten miteinander verklebt, wofür entsprechend lackfreie Zonen vorgesehen werden müssen, wenn die Blechteile - zumindest das Rumpfteil - noch im unverformten flachen Zustand einer entsprechenden Bedruckung unterzogen werden. Natürlich bedeutet diese besondere Abdichtung der Falzverbindung nicht nur einen erhöhten Materialaufwand, sondern auch einen entsprechenden Fertigungsvorgang.

Der Erfindung liegt die Aufgabe zugrunde, Behälter der in Rede stehenden Art leichtgewichtiger bzw. stabiler und ohne eigenständige Dichtungsmaßnahmen auch in gelackten Verbindungsbereichen zuverlässig dicht herzustellen.

Diese Aufgabe wird erfindungsgemäß durch die Maßnahmen des Anspruches 1 gelöst.

Erfindungsgemäß wird die zwischen den Teilen des Behälters bislang vorgesehene Falzverbindung durch eine Schweißverbindung ersetzt, deren Herstellungsverfahren auf die besonders engen räumlichen Verhältnisse Rücksicht nimmt, die im Verbindungsbereich der besonders dünnwandigen und damit verhältnismäßig kleinvolumigen Behälterteile gegeben sind. Das angewendete Schweißverfahren vermeidet den An-

020C098

-3-

griff von Elektroden, indem die für das Schweißen erforderliche Wärme mit Hilfe eines oder mehrerer Energiestrahlen aufgebracht wird, die im Bereich der herzustellenden Verbindungsnaht über den Verbindungsbereich hinweggeführt werden bzw. gegenüber denen die Behälterteile entsprechend bewegt werden. Bei dem Energiestrahl kann es sich um einen solchen handeln, der durch Fokussierung entsprechend gebündelt wird, bevorzugt wird jedoch ein Laserstrahl eingesetzt, der in sich etwa parallel ausgerichtet ist und daher keine konstante Abstandseinhaltung erfordert, wie dies bei fokussierter Strahlung mit Brennpunktbildung der Fall ist. Das Schweißen mit Hilfe solcher Strahlen ist ein Schmelz-Schweiß-Verfahren, das ohne gesondert zugeführtes Schweißmittel arbeitet, d.h. ohne gegenständlichen Angriff eines Schweißgerätes an den zu verschweißenden Blechen wird durch den entsprechend gerichteten Energiestrahl, insbesondere Laserstrahl, das Blechmaterial bis zur Schmelze erhitzt, so daß die geschmolzenen Bereiche beider zu verbindender Teile ineinander überlaufen. Es entsteht eine Schweißnaht zwischen den Blechteilen aus dem Blechmaterial selbst, die über den Verbindungsbereich hinweggeführt ist und die beiden Teile des Behälters absolut dicht miteinander verbindet. Somit sind keine eigenständigen Dichtungsmaßnahmen erforderlich. Die Schweißnaht schafft sowohl eine unter Berücksichtigung der Fallbelastung mechanisch stabile als auch eine dichte Verbindung zwischen den Behälterteilen.

Von besonderem Vorteil ist, daß der Verbindungsbereich an Übergangsstellen zwischen den Behälterteilen vorgesehen werden kann, die ansonsten kaum zugänglich sind, jedenfalls kaum wirtschaftlich durch Elektroden für eine Widerstandsschweißung beispielsweise. Der Energiestrahl kann aus entsprechender Entfernung auf den Verbindungsbereich gerichtet werden, auch ist es möglich, den Energiestrahl

Dipl.-Ing. Otto Flügel, Dipl.-Ing. Manfred Säger, Patentanwälte, Cosimastr. 81, D-8 München 81

-4-

durch Reflektoren an solche Verbindungsbereiche zu führen,
die nur vom Inneren des Behälters oder ähnlichen räumlichen Stellen her zugänglich sind. Dabei können die zu verbindenden Randbereiche der Behälterteile in beliebiger
Weise maschinell in ihre beabsichtigte Verbindungslage beaufschlagt gehalten werden, auch kann der Verbindungsbereich zumindest im Moment der Schweißung hinsichtlich der
Energiestrahlrichtung hinterfangen sein.

Mit der gewählten Schmelzschweißmethode treten aber nicht
nur praktisch keine Raumprobleme auf, es ergeben sich auch
keine Schwierigkeiten, gelackte oder anderweitig isolierte
Blechbereiche auf Schmelztemperatur zu erwärmen.

Die Festigkeit und Dichtigkeit der Verbindung zwischen den
Behälterteilen wird ausschließlich durch die Schweißnaht
angestrebt. In einigen Ausführungen vorgesehene Einrollungen oder auch Falzbildungen erfolgen grundsätzlich im Anschluß an das Schmelzverschweißen und sind nicht unter dem
Gesichtspunkt der Dichtigkeit und/oder Festigkeit der Verbindung, sondern nur zur Vermeidung von vorstehenden
scharfen Kanten und/oder zur Erhöhung der Formstabilität
in diesem Verbindungsbereich zwischen den Behälterteilen
vorgesehen.

Die anstelle des Falzes stattfindende Schmelzverschweissung im Verbindungsbereich zwischen den Behälterteilen
kann auf mancherlei Weise erfolgen, wie dies die Figuren
der Ausführungsbeispiele erkennen lassen, die nur einen
Ausschnitt der Möglichkeiten wiedergeben. Eine besonders
bevorzugte Ausführung besteht darin, die miteinander zu
verschweißenden Randbereiche der Blechteile über den Verbindungsbereich hinweg parallel zu führen. Die Schweißverbindung kann dann von einer der äußeren Breitseiten der
parallelen Randbereiche ausgeführt durch den zugehörigen

Dipl.-Ing. Otto Flügel, Dipl.-Ing. Manfred Säger, Patentanwälte, Cosimastr. 81, D-8 München 81

-5-

Randbereich hindurch bis in den hinsichtlich der Energiestrahlrichtung dahinterliegenden anderen Randbereich geführt werden, so daß sich zwischen den aneinander anliegenden Flächen der Randbereiche eine metallisch durchgehende Naht aus demselben Blechwerkstoff ergibt. Im allgemeinen werden die Blechstärken der beiden miteinander zu
verbindenden Behälterteile gleich sein, man kann aber auch
unterschiedliche Blechstärken verwenden.

Eine weitere reizvolle Verbindungsmöglichkeit bei parallel angeordneten Randbereichen ergibt sich durch deren
Verschweißung von den parallel endenden Stirnseiten aus
gesehen. Hier hat man keine enge Beschränkung hinsichtlich
der Aufschmelztiefe in Richtung des Energiestrahles gesehen.

Diese parallel geführten Randbereiche wie auch das Zuführen eines dritten Teils, das zwei einander stirnseitig gegenüberliegende Randbereiche übergreift, bringen den Vorteil mit sich, daß Fertigungstoleranzen, Zuführabweichungen und/oder Verziehungen durch das Parallelführen bzw.
Übergreifen aufgefangen werden können. Dies ist insbesondere für eine automatisch erfolgende Verschweißung von
Vorteil, die im übrigen für die exakte Energiezufuhr anzustreben ist.

Die mit Hilfe des erwähnten Schmelz-Schweiß-Verfahrens,
insbesondere unter Einsatz eines Lasers, aus mehreren Teilen zusammengestzten Behälter können vielgestaltig geformt
sein. So kommen insbesondere zylinderförmige Dosen mit
kreisringförmiger Rumpfmantelfläche in Betracht, darüber
hinaus aber auch Kanister mit vierkant- oder auch dreikantförmigem Querschnitt, wobei die Eckübergänge zwischen
den Polygonalflächen mehr oder weniger stark abgerundet

Dipl.-Ing. Otto Flügel, Dipl.-Ing. Manfred Säger, Patentanwälte, Cosimastr. 81, D-8 München 81

5a

sein können. Es kommen auch dosenförmige Behälter mit ovalem Querschnitt in Betracht. Darüber hinaus müssen der Deckel und der Boden nicht in zueinander parallelen Ebenen liegen.

Eine Vorrichtung zur Durchführung des Verfahrens für die Herstellung solcher Behälter zeichnet sich vor allem dadurch aus, daß - neben der Quelle für den Energiestrahl - zwei gesteuert bewegbare Halteteile vorgesehen sind, deren jeder an einem der miteinander zu verschweißenden Blechteile des Behälters angreift, und zwar derart, daß die Blechteile mit ihren zu verschweißenden Randbereichen zumindest an der Schweißstelle in dichte Zuordnung zueinander gebracht werden. Um das Ineinanderfließen der durch den Energiestrahl geschmolzenen Materialbereiche der beiden Blechteile zu erleichtern bzw. zu ermöglichen, sollen diese Blechbereiche möglichst abstandsfrei einander zugeordnet sein.

In bevorzugter Ausführung kann mit diesen Halteteilen zugleich eine Zusammenführung der beiden zu verschweißenden Teile verbunden werden. Es kann auch wenigstens eines der beiden Halteteile dabei das Blechteil, an dem es angreift, zugleich verformen.

Soweit die Strahlenquelle einen parallel gebündelten Energiestrahl abgibt, insbesondere einen Laserstrahl, ist der Abstand zwischen Strahlenquelle und Schweißstelle in einem bestimmten Umfange frei wählbar und auch veränderlich, was bedeutet, daß ein beispielsweise polygonaler Behälter hinsichtlich der Schweißnaht zwischen dem Oberboden oder dem Unterboden und dem Rumpf einfach um seine Zentralachse herum gedreht werden kann, ohne daß das Verschweißen aufgrund des sich zwischen den Polygonecken und den Polygonseitenmitten verändernden Abstandes beeinträchtigt wird. Ist ei-

Dipl.-Ing. Otto Flügel, Dipl.-Ing. Manfred Säger, Patentanwälte, Cosimastr. 81, D-8 München 81

5b

ne solche exakt parallele Ausrichtung bzw. Bündelung des Stahles nicht vorhanden, so bedarf es einer Fokussierung mit der Folge, daß ein mehr oder weniger stark begrenzter Brennpunkt entsteht, in welchem die Schweißstelle möglichst exakt liegen sollte. In einem solchen Falle empfiehlt es sich bzw. ist es notwendig den Abstand zwischen der Strahlenquelle bzw. der Fokussiereinrichtung und der Schweißstelle konstant zu halten. Während dies bei einer kreiszylindrischen Dose durch Drehbewegung um deren Längsmittelachse in einfachster Weise eintritt, muß bei solchen Schweißnähten, die nicht kreiszylindrisch um eine Achse herum verlaufen, eine entsprechende Abstandssteuerung erfolgen. Dafür gibt es verschiedene Möglichkeiten. Grundsätzlich kann man die Strahlenquelle um den zu verschweißenden Behälter bzw. dessen Teile entsprechend abstandskonstant herumgesteuert anordnen, vielfach wird man jedoch den Behälter bzw. dessen zu verschweißende Teile derart an der Quelle vorbeiführen, daß der Abstand zwischen Schweißstelle und Strahlenquelle konstant bleibt. Bei Behältern mit polygonalem Querschnitt, beispielsweise rechteckigen Kanistern, verlangt dies ein Vorbeiführen der zu verschweißenden Behälterteile in einer Bewegungsbahn, die von einer Rotation um die Zentralachse abweicht. In diesem Falle muß die Vorrichtung eine entsprechende Führung der Kanisterteile sicherstellen, was vorzugsweise ebenfalls durch die beiden Halteteile der Vorrichtung durchgeführt wird.

Weitere vorteilhafte Ausführungen ergeben sich aus Unteransprüchen im Zusammenhang mit den in der Zeichnung wiedergegebenen Ausführungsbeispielen, auf die besonders Bezug genommen wird und deren nachfolgende Beschreibung die Erfindung näher erläutert. Es zeigen:

Figur 1     eine teilweise aufgeschnittene perspektivische
            Darstellung eines dosenförmigen Behälters aus
            einem Rumpfteil und einem mit diesem verschweißten Unterbodenteil;

Figur 2     jeweils etwa auf den Aufschnittbereich gemäß
bis 11      Figur 1 beschränkte Längsschnittdarstellungen
            durch andere Ausbildungen jeweils eines Rumpfteiles und eines Unterbodenteiles mit dazwischen
            unterschiedlich verlaufend angeordneten Schweißnähten;

Figur 12    einen entsprechenden Teilschnitt eines oberen Behälterbereiches mit Verbindung zwischen einem
            Rumpfteil und einem Oberbodenteil;

Figuren     Ausschnittsdarstellungen wie denjenigen der Fi-
13 bis 20   guren 2 bis 11 mit prinzipieller Wiedergabe von
            Halteteilen einer Vorrichtung verschiedener
            Ausführungen.

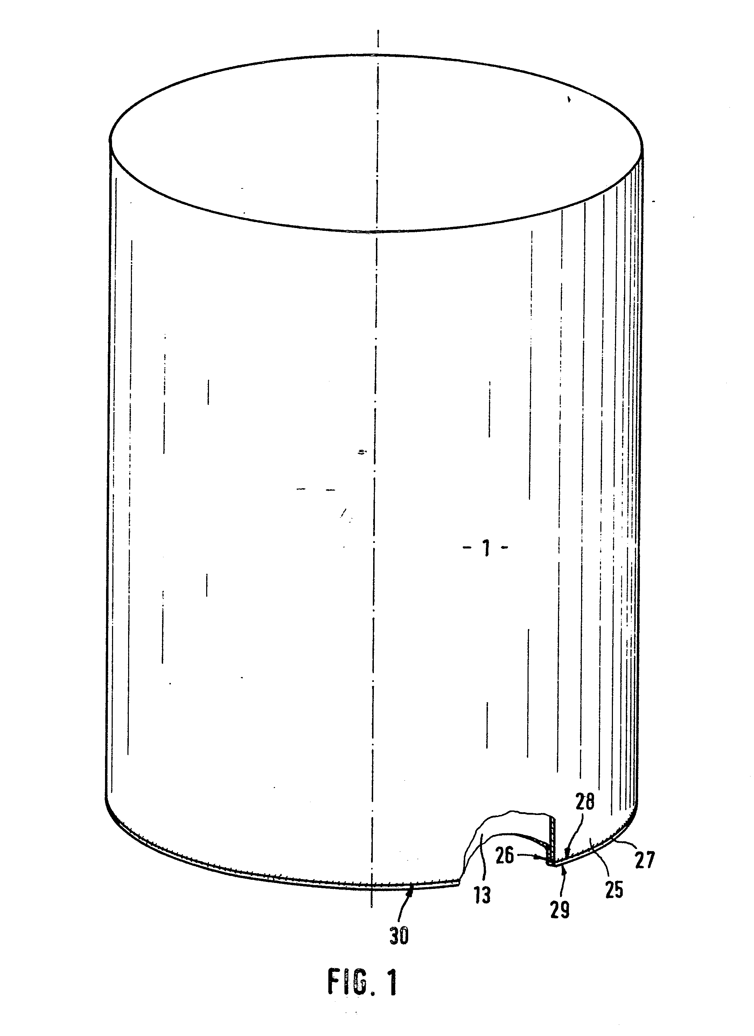

Der dosenförmige Behälter gemäß Figur 1 weist einen kreiszylindrischen Querschnitt auf und steht im übrigen stellvertretend für andere Behälterformen, insbesondere auch
polygonalen Querschnittes, beispielsweise eines Kanisters
mit rechteckiger Querschnittsfläche, deren Ecken in bekannter Weise abgerundet ausgeführt sind. Durch Einsatz
des Laserstrahl-Schmelzschweißverfahrens lassen sich hier
allerdings auch scharfkantigere Ecken ausbilden.

Der mantelförmig um die Zylinderachse herum verlaufende
Rumpfteil 1 ist nach unten hin mit einem etwa senkrecht
zur Längsachsrichtung verlaufenden Unterbodenteil 13 nach
unten hin abgeschlossen. In ähnlicher Weise kann ein Oberbodenteil den Rumpfteil nach oben hin abschließen, wobei
eine Einfüllöffnung, ein Gewindestutzen oder dergleichen
in bekannter Weise vorgesehen werden kann.

-7-

Das kreisscheibenförmig ausgebildete Unterbodenteil 13 ist an seiner Peripherie mit einem nach unten abgebogenen Randbereich 26 versehen, dessen Breitfläche zylindermantelförmig um die Längsachse herum verläuft und an dem als Randbereich 25 dienenden unteren Endabschnitt des Rumpfteiles 1 innenseitig anliegt. Der nach unten abragende Randbereich 26 des Bodenteils 13 ist in seinem unteren Endabschnitt wiederum radial nach außen gebogen und bildet eine kreisförmig umlaufende Endkante 29, dessen Stirnfläche 30 radial nach außen gerichtet ist und bündig mit der Außenfläche des Rumpfteiles 1 und damit dessen Randbereich 25 verläuft. Die untere Endkante 28 des Randbereiches 25 des Rumpfteiles 1 verläuft somit unmittelbar neben der angrenzenden Kante der Stirnseite 30 des radial abstrebenden Randabschnittes des Randbereiches des Unterbodenteils 13, d.h. der Randbereich 25 des Rumpfteiles 1 greift in die ringsumlaufende rechtwinklige Ecke ein, die zwischen der Außenfläche des Randbereiches 26 und der nach oben gerichteten Fläche des unteren, radial abgebogenen Abschnittes des Randbereiches ausgebildet ist.

Mit einem etwa radial von außen her aufgebrachten Laserstrahl werden die aneinander angrenzenden Kantenbereiche zwischen der unteren Berandung des Rumpfteiles 1 und der oberen Berandung der Stirnfläche 30 des radial abgebogenen Teils des Randbereiches 26 des Unterbodenteils 13 gleichzeitig bis zur Schmelze des Materials der Teile aufgeheizt, so daß diese Kantenbereiche ineinander überfließen und einen durchgehenden homogenen Übergang zwischen den somit einstückig in Verbindung gebrachten Teilen 1 und 13 zur Verfügung stellen. Dieser Übergang im Verbindungsbereich bzw. der Schweißnaht ist für jedes Füllmedium absolut dicht zu gestalten und schafft die Festigkeit im Übergangsbereich, die auch einer Fallbeanspruchung des gefüllten Behälters auf den verschweißten Eckbereich gewachsen ist. Die Schweißnaht stellt sicher, daß sich eine solche Fallbeanspruchung allenfalls in einer Verformung, nicht jedoch in einem wie auch immer gearteten Öffnen des Verbindungsbereiches zwischen den Teilen äußert.

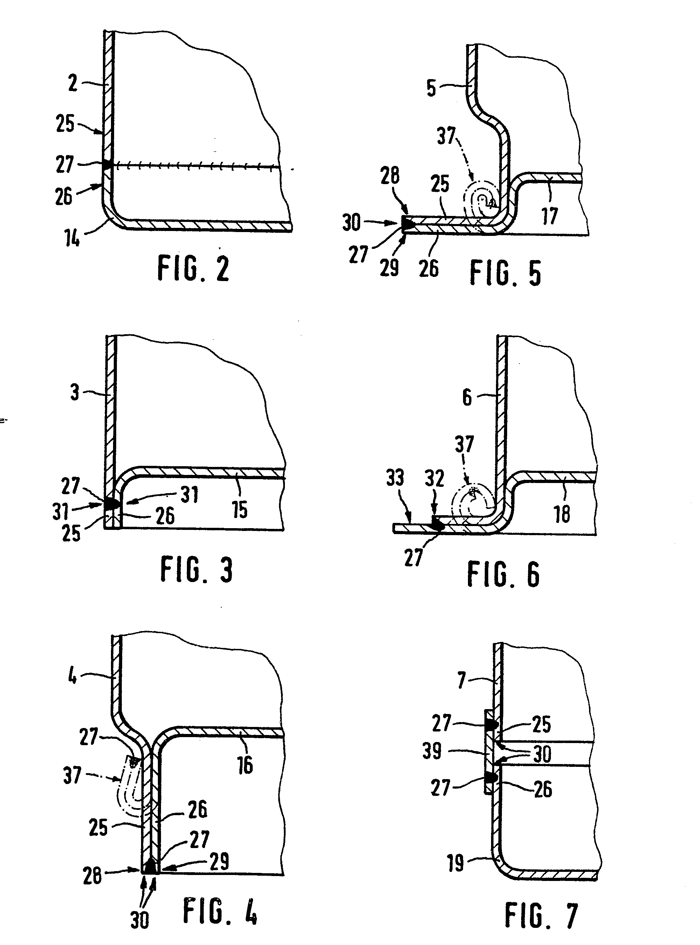

Figur 2 zeigt die grundsätzliche Möglichkeit der Verlegung einer Schweißnaht im Stoßbereich zweier in gleicher Ebene verlaufender Mantelflächen. Das Unterbodenteil 14 ist scheibenförmig ausgebildet und im Bereich der Peripherie bogenförmig in einem kreiszylindrischen Randbereich 26 auslaufend abgebogen. Der kreiszylindrische Randbereich 26 hat den gleichen Durchmesser wie das kreiszylindrische Rumpfteil 2 bzw. dessen nach unten gerichtete Berandung, die dessen Randbereich 25 bildet. Die einander gegenüberliegenden Stirnflächen der Randbereiche 25 und 26 sind zusammengeführt, ihre aneinander anliegenden Kanten werden mit Hilfe eines etwa radial gerichteten Laserstrahles bis zur Schmelze aufgeheizt, so daß sie im Nahtbereich 27 ineinanderfließen und die beiden Teile 2 und 14 homogen miteinander verbinden. Bei einer solchen Ausgestaltung von Rumpfteil und Unterbodenteil, es könnte sich natürlich auch um ein Oberbodenteil handeln, ist eine verhältnismässig hohe Fertigungs- und Zuführgenauigkeit erforderlich, damit die Kanten an den Ecken der Stirnseiten 30 der Teile 2 und 14 über den Umfang hinweg durchgehend aneinandergelegt werden können. Die Tiefe der Schweißnaht 27 ist auf die Blechdicke beschränkt.

Beim Ausführungsbeispiel gemäß Figur 3 ist innerhalb des unteren Randbereiches 25 des Rumpfteiles 3 der hohlzylindrische Randbereich 26 eines ansonsten scheibenförmigen Unterbodenteils 15 gelegen, wobei die radial verlaufende Scheibe des Teils 15 bogenförmig mit seinem zylinderförmigen Randbereich 26 verbunden ist bzw. ineinander übergeht. Die Abbiegung des Randbereiches 26 erfolgt nach unten, d.h. der kreisscheibenförmige Bereich des Unterbodens

Dipl.-Ing. Otto Flügel, Dipl.-Ing. Manfred Säger, Patentanwälte, Cosimastr. 81, D-8 München 81

-9-

15 liegt oberhalb der unteren Abschlußkante des Randbereiches 26, die mit der unteren Abschlußkante des Randbereiches 25 des Rumpfteils 3 bündig abschließt. Das Unterbodenteil 15 ist in das Rumpfteil 3 derart eingesetzt, daß die Außenfläche des Randbereiches 26 des Teils 15 an der Innenfläche des Randbereiches 25 des Teils 3 mehr oder weniger fest anliegt. Im Bereich des Parallelverlaufs der Randbereiche 25 und 26 ist eine Schweißnaht kreisringförmig verlaufend gelegt, die von der äußeren oder der inneren Breitseite 31 der parallelen Randbereiche 25 und 26 her aufgebracht sein kann. Figur 3 zeigt das Aufbringen von radial außen, also auf die äußere Fläche 31 des Randbereichs 25, derart, daß sich das Aufschmelzen bzw. die Schweißnaht durch den Randbereich 25 hindurch bis in den Randbereich 26 erstreckt und die beiden Teile damit homogen verbindet.

Sowohl beim Ausführungsbeispiel nach Figur 2 als auch bei demjenigen nach Figur 3 und in der Folge auch bei denjenigen nach den Figuren 7 bis 10 und 12 kann das Aufbringen der Naht auch von radial innen her erfolgen, also mit einem Laserstrahl, der innerhalb des von dem Rumpfteil bzw. dessen axialer Verlängerung umgriffenen Raum her mit oder ohne Reflektor auf die Innenwandung des dort gelegenen Wandbereiches gerichtet ist.

Beim Ausführungsbeispiel gemäß Figur 4 ist ein ähnliches Unterbodenteil 16 wie beim Ausführungsbeispiel nach Figur 2 eingesetzt. Auch hier liegen der Randbereich 26 innen und der Randbereich 25 des Rumpfteils 4 außen parallel zueinander derart, daß die unteren Endkanten 28 des Bereichs 25 und 29 des Bereichs 26 in einer Ebene senkrecht zur Längsachse des Behälters verlaufen; die Stirnseiten der nach unten auslaufenden Randbereiche 25 und 26 liegen also in dieser Ebene und grenzen aneinander. Auf diesen

Dipl.-ing. Otto Flügel, Dipl.-ing. Manfred Säger, Patentanwälte, Cosimastr. 81, D-8 München 81

-10-

Grenzbereich bzw. die angrenzenden Stirnflächen wird der Laserstrahl gerichtet, so daß die in diesem Grenzbereich aneinanderstoßenden Kanten der Randbereiche 25 und 26 aufgeschmolzen werden und deren Material ineinanderfließt. Es entsteht eine Schweißnaht 27, die sich in axialer Richtung der Randbereiche 25 und 26 verjüngend erstreckt, wie dies Figur 4 zeigt. Diese Schweißnaht kann tiefer geführt werden, da sie nicht durch die Dicke der Randbereiche 25 und 26 begrenzt ist.

Figur 5 zeigt eine ganz ähnlich hergestellte Ausführungsform mit der Abweichung, daß die Randbereiche des Unterbodenteils 17 und des Rumpfteils 5 in einem radialen Flansch aus den parallelen Randbereichen 25 und 26 zusammengeführt werden deren radiale Enden in gleicher Weise von der Stirnseite her verschweißt sind, wie dies im Zusammenhang mit Figur 4 geschildert wurde.

In beiden Ausführungsbeispielen nach den Figuren 4 und 5 ist der untere, dem Unterbodenbereich benachbarte Abschnitt des Rumpfteils 4 bzw. 5 radial eingeschnürt ausgebildet, so daß sich vom oberen Bereich der Rumpfteile her gesehen zum Boden hin ein hohlzylindrischer Raum ergibt. Dieser dient in beiden Ausführungsbeispielen der Aufnahme eines unteren Teils der Randbereiche 25 und 26 derart, daß diese nach dem Verschweißen in den Hohlraum hinein verformt werden, sei es durch eine Rollierung, eine Umbördelung oder dergleichen, so daß die Schweißnaht 27 bzw. die angrenzenden Kanten auf den Behälter zu eingerollt bzw. eingeschlagen sind, wie dies die Figuren zeigen.

Grundsätzlich kann eine solche Einrollung bzw. Einbördelung oder Umfalzung auch radial nach innen hin gerichtet erfolgen.

Dipl.-Ing. Otto Flügel. Dipl.-Ing. Manfred Säger, Patentanwälte, Cosimastr. 81, D-8 München 81

-11-

Während beim Ausführungsbeispiel gemäß Figur 1 also die Endkanten 28 und 29, zwischen denen die Schweißnaht 27 verläuft, einmal im radial nach außen gerichteten Stirnseitenbereich des radial abgebogenen Abschnittes des Randbereichs 26 des Unterbodenteils 13 und zum anderen als Unterkante der Außenmantelfläche des Rumpfteils 1 gebildet sind, befinden sich die Endkanten 28 und 29 im Falle der Ausführungen nach den Figuren 4 und 5 jeweils am Auslaufende der zugehörigen Randbereiche, derart, daß sie die parallel verlaufenden Stirnseiten 30 beider Endbereiche zwischen sich aufnehmen. Die einen Wulst, eine Einrollung 37 oder dergleichen bildenden Randbereiche können grundsätzlich derart verformt werden, daß sie den größeren Durchmesser des Rumpfteils oberhalb des Wulstes radial nicht überragen.

Bei dem Ausführungsbeispiel gemäß Figur 6 ist in Abweichung von dem in Figur 5 der eine radial nach außen abragende Randbereich 25 des Rumpfteiles 6 radial kürzer ausgebildet als der parallel dazu radial abragende Randbereiche 26 des Unterbodenteils 18 dieses Ausführungsbeispieles. Die radial äußere Endkante 32 des radial kürzeren Randbereiches 25 endet also im Breitseitenbereich 33 des radial weiter abragenden Randbereiches 26. In die zwischen der Breitseite 33 und der anliegenden Kante 32 gebildeten Ecke hinein wird die Schweißnaht 27 durch entsprechende Ausrichtung des Laserstrahles gelegt. Bei dieser Gelegenheit darf darauf hingewiesen werden, daß auch bei den bereits behandelten und weiteren Ausführungsbeispielen, bei denen eine Schweißnaht von radial innen oder radial außen aufgebracht wird, dies nicht notwendig durch eine Ausrichtung des Laserstrahles streng in radialer Richtung geschehen muß.

Dipl.-Ing. Otto Flügel. Dipl.-Ing. Manfred Säger, Patentanwälte, Cosimastr. 81, D-8 München 81

-12-

Das Ausführungsbeispiel gemäß Figur 7 unterscheidet sich von demjenigen gemäß Figur 2 dadurch, daß die aufeinanderzu gerichteten Stirnseiten des Randbereiches 25 des Rumpfteils 7 und des nach oben gerichteten Randbereiches 26 des Unterbodenteils 19 voneinander beabstandet sind. Die Randbereiche 25 und 26 sind mit Hilfe eines dritten Teils 39 in Form einer Bandage außenumfangsseitig übergriffen und jeweils über eine Schweißnaht 27 mit dieser Bandage in schmelztechnisch hergestelltem Übergang verbunden. Dies hat den Vorteil, daß Fertigungs- und Zuführgenauigkeiten keine so hohen Anforderungen erfüllen müssen, wie dies beim Beispiel gemäß Figur 2 der Fall ist. Des weiteren wird eine verhältnismäßig großflächige Anlage jeweils zwischen den Bereichen 25 und 26 einerseits und dem weiteren Teil 39 andererseits erreicht, in deren Bereich jeweils eine zumindest annähernd über die Dicke zweier anliegender Bleche reichende Schweißnaht 27 geführt ist, die demnach also eine entsprechende Ausdehnung aufweist. Dadurch erreicht man eine Versteifung des Verbindungsbereiches bzw. durch das weitere Teil eine zusätzliche Formstabilität. Ähnliches gilt für das Ausführungsbeispiel gemäß Figur 3. Auch bei den Ausführungsbeispielen nach den Figuren 4 bis 6 kann durch eine zusätzliche, von einer Breitseite her aufgebrachte Naht eine weitere Versteifung erzielt werden. Grundsätzlich sind zwei oder mehrere parallele Schweißnähte 27 zwischen zwei Teilen je nach Beanspruchung denkbar.

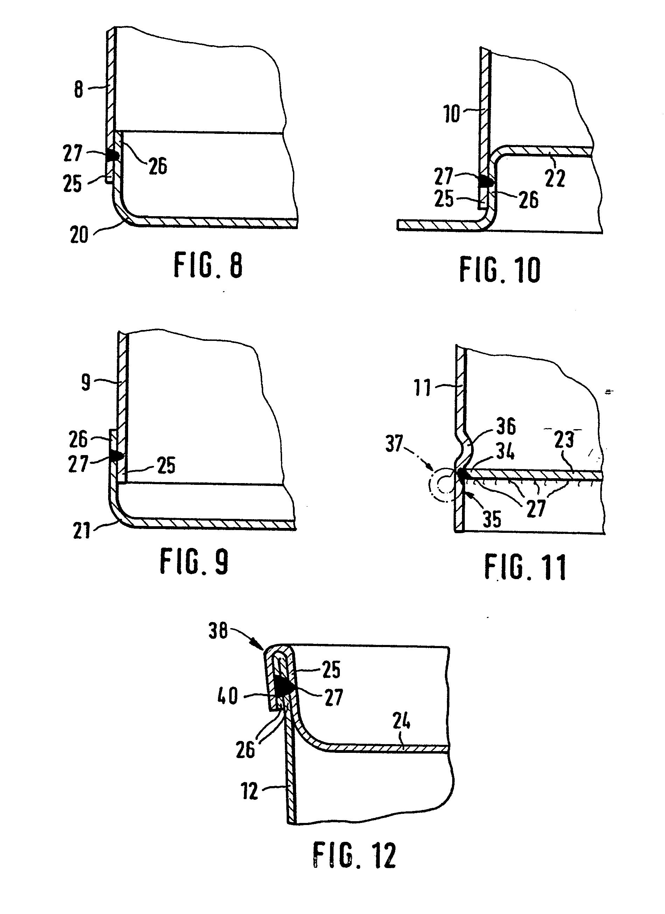

Bei dem Ausführungsbeispiel gemäß Figur 8 ist ein rohrförmiges Rumpfteil 8 und ein napfförmiges Unterbodenteil 20 vorgesehen, das ausgehend von einer Kreisscheibenform an der Peripherie bogenförmig abgewinkelt in einen kreiszylindrischen Randbereich 26 übergeht, der nach oben gerichtet ist. Beim Ausführungsbeispiel gemäß Figur 8 ist dieser Randbereich 26 im Durchmesser kleiner als der Rumpfbe-

-13-

reich 8, so daß er in dessen unteren Endabschnitt, der den Randbereich 25 des Teils 8 bildet, an diesem anliegend angreift. Die Randbereiche 25 und 26 verlaufen demnach über eine axiale Strecke hinweg parallel zueinander und werden in diesem Parallelbereich mit Hilfe einer radial von aussen oder innen von der Breitseite her aufgebrachten Schweißnaht 27 durch einen entsprechend gerichteten Laserstrahl aufgeschmolzen und verbunden.

Das Beispiel gemäß Figur 9 unterscheidet sich von demjenigen nach Figur 8 dadurch, daß der an dem Unterbodenteil 21 nach oben abstrebend ausgebildete kreiszylindrische Randbereich 26 den den Randbereich 25 bildenden unteren Abschnitt des Rumpfteils 9 außen umfaßt. Auch hier übergreifen die Abschnitte 25 und 26 einander über einen bestimmten axialen Bereich hinweg, in welchem sie durch eine radial von innen oder außen breitseits durch entsprechende Aufheizung gebildete Schmelzschweißnaht homogen verbunden sind.

Bei dem Ausführungsbeispiel gemäß Figur 10 ist ein Bodenteil 22 von der Form her so gestaltet wie beim Ausführungsbeispiel gemäß Figur 6. Das zugehörige Rumpfteil 10 ist jedoch nicht mit einem nach außen abragenden Randbereich versehen, sondern läuft in der Mantelwandung nach unten aus, so daß der untere Abschnitt des Teils 10 als Randbereich 25 den kreiszylindrisch verlaufenden Randbereich 26 des Bodenteils 22 außen umgreift. Dieser Umgriff weist eine bestimmte axiale Länge auf, innerhalb derer die Schweißnaht 27 durch radial von innen oder außen her geführtes Aufheizen gebildet ist, die die beiden Randbereiche verbindet.

Beim Ausführungsbeispiel gemäß Figur 6 sind die parallelen nach außen gerichteten Randbereiche 25 und 26 zu einem Wulst 37 nach oben und zur Behälterachse hin gekrümmt

Dipl.-Ing. Otto Flügel, Dipl.-Ing. Manfred Säger, Patentanwälte, Cosimastr. 81, D-8 München 81

-14-

ausgeformt, so daß das Ende des Bereichs 26 mit der Breitseite 33 nach innen gerichtet auf den Boden bzw. das untere Ende des Behälters hin weist und demnach der kürzere Randbereich radial innerhalb eingerollt ist. Auf diese Weise wird die Schweißnaht 27 vollständig nach außen abgedeckt und jede vorstehende Kante vermieden. In ähnlicher Weise läßt sich beim Beispiel gemäß Figur 10 der radial nach außen verlaufende Endbereich des Unterbodenteils einrollen.

Bei dem Ausführungsbeispiel gemäß Figur 11 werden zwei rechtwinklig zueinander anstoßend zusammengeführte Teile miteinander in der geschilderten Art verschweißt. Dort ist ein Rumpfteil 11 grundsätzlich kreiszylindrischer Formgebung oberhalb seines unteren Randes mit einer umlaufend ausgeformten Sicke 36 versehen, die ins Behälterinnere hin vorspringend ausgeformt ist und der äußeren Peripherie eines ausschließlich kreisscheibenförmigen Unterbodenteils mit demnach kreisförmig verlaufender Endkante 34 einen Sitz gegen axiale Verschiebung zur Verfügung stellt. Auf diese Weise läßt sich das Unterbodenteil 23 auf einfache Weise exakt in das Rumpfteil 11 einsetzen. Dabei kommt also die Kante 34 in stumpfe Anlage an die Breitseite 35 des Rumpfteiles 11, so daß in einem oder auch beiden der dadurch gebildeten umlaufenden Inneneckbereichen eine Aufheizung zur Bildung der Schmelzschweißnaht 27 vorgenommen werden kann; im dargestellten Ausführungsbeispiel ist das Aufheizen nur von unten innen her beispielsweise unter 45° in den Eckbereich ausgerichtetem Laserstrahl ausgeführt. Wie die Figur erkennen läßt, kann man den nach unten hin über das Unterbodenteil 23 hinausragenden Endabschnitt des Rumpfteiles 11 wiederum nach innen oder - wie dargestellt - nach außen umbördeln oder zu einem Wulst 37 einrollen.

Dipl.-Ing. Otto Flügel, Dipl.-Ing. Manfred Säger, Patentanwälte, Cosimastr. 81, D-8 München 81

-15-

Bei dem Ausführungsbeispiel gemäß Figur 12 schließlich ist die Verbindung zwischen einem etwa kreiszylindrischen hohlen Rumpfteil 12 und einem Oberbodenteil 24 gezeigt. Der nach oben hin abragende Endabschnitt des Rumpfteils 12 ist nach außen hin auf sich selbst zurückgeklappt, bildet also eine Schicht doppelter Blechstärke. Das Oberbodenteil 24 ist von einem kreisscheibenförmigen Bereich aus peripher nach oben hin abgebogen und läuft in einem kreiszylindrischen hohlen Bereich aus, der sich mit einem unteren Randbereich 25 parallel zu dem durch das Umfalzen verstärkten oberen Randbereich des Rumpfteils 12 an diesem innenseitig anliegend erstreckt. Entgegen der in der Zeichnung wiedergebenen Ausformung ist ein nach oben hin an den Randbereich 25 anschließender Bereich 40 des Oberbodenteils 24 vor und während der Schweißung nicht von außen her auf den Randbereich 26 des Teils 12 umgeklappt, sondern von diesem derart beabstandet, daß ein Aufheizen der Randbereiche 25 und 26 von einer deren Breitseiten her zur Bildung der Schweißnaht 27 erfolgen kann. Im dargestellten Ausführungsbeispiel ist die Schweißnaht 27 von der radial äußeren Fläche des doppelwandigen Randbereiches 26 her diese durchdringend bis in den radial innen liegenden Randbereich 25 des Teils 24 geführt, verbindet also die Randbereiche 25 und 26 in der bereits vorgeschilderten Weise. Durch danach erfolgendes Umklappen des Endbereiches 40 wird die Schweißnaht 27 abgedeckt, wie dies Figur 12 zeigt. Es handelt sich dabei um eine Art gefalzten Bereich, der jedoch keine formschlüssige Verbindungsfunktion aufweist, da der Endbereich 40 lediglich parallel zu dem doppelwandig ausgebildeten Außenbereich 26 verläuft und nicht um diesen herumgeführt ist. Der "Falz" 38 in Figur 12 hat demnach wie die vorgeschilderten Wülste bzw. Einrollungen 27 lediglich eine formstabilisierende und eine Abdeckfunktion, nicht jedoch diejenige einer Verbindung.

Dipl.-Ing. Otto Flügel, Dipl.-Ing. Manfred Säger, Patentanwälte, Cosimastr. 81, D-8 München 81

-16-

Durch das Schmelzschweißen der miteinander zu verbindenden Teile ohne Zufuhr von weiterem, wie auch immer geartetem Schmelzgut, also allein durch Ineinanderfließen des
durch die Energiezufuhr schmelzenden Materials der beiden
Teile im nahtförmigen Verbindungsbereich wird nicht nur
der apparative Aufwand für die Zufuhr eines solchen weiteren Schweißmittels bzw. Schweißgutes überflüssig, es wird
auch ein Beitrag zur beabsichtigten Gewichtsreduzierung
geleistet.

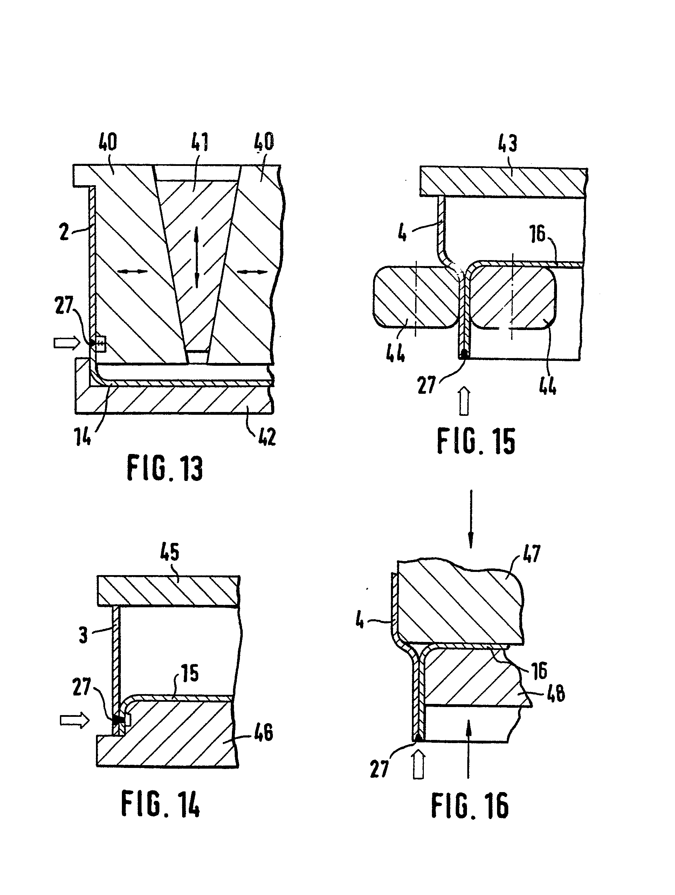

Eine vorrichtungsmäßige Halterung zweier miteinander zu
verschweißender Behälterteile zeigt im Hinblick auf die
vorstehend geschilderten Ausführungen nach den Figuren 2,
7, 8 und 9 die Prinzipdarstellung gemäß Figur 13. Dort
wird ein Bodenteil 14 - und in ähnlicher Weise 19, 20, 22 -
in ein Halteteil 42 eingesetzt, derart, daß die Ansätze
der Seitenwandungsberandung des Behälters nicht nach aussen entweichen können. Grundsätzlich kann das Halteteil 42
für die Prägung des Bodenteils mit ausgenutzt werden. Im
inneren des Rumpfteiles 2 ist ein weiteres Halteteil in
Form eines Spreizkörpers 40, 41 vorgesehen, daß das Rumpfteil 2 zum einen auf die Anlage mit dem nach oben gerichteten Randbereich des Bodenteiles 14 hin bewegt, um im
Bereich der Schweißnaht 27 eine dichte Anlage zu erzeugen,
und das zum anderen das dünne Blech des Rumpfteiles 2 wie
auch des nach oben gerichteten Randbereiches des Unterbodens 14 in die exakte Umrißkontur des Behälters zu überführt. Zu diesem Zwecke ist das Halteteil 40, 41 als
Spreizkörper ausgebildet, d.h. ein konusförmiges Teil 41
ist zwischen zwei Formteile 40 eingesetzt, wie dies Figur
13 im einzelnen erkennen läßt. Eine solche Vorgehensweise
empfiehlt sich insbesondere bei beispielsweise rechteckig
ausgebildeten Kanister-Behältern.

Figur 14 zeigt eine Vorrichtung, wie sie beispielsweise bei den Behältern nach Figuren 1 und 3 verwendbar ist. Dabei wird der Unterboden - beispielsweise 15 gemäß Figur 3 - von einem Paßteil 46 derart aufgenommen, daß die nach aussen gerichtete Berandung fixiert ist. Das Rumpfteil 3 wird mit Hilfe eines Andrücktellers 45 in Parallellage zu dem Randbereich des Bodenteils 15 ausgerichtet bzw. in diese Lage verschoben. Dabei muß bedacht werden, daß das Rumpfteil 3 als in Umfangsrichtung durch Schweißen geschlossenes Gebilde ausgeformt ist. Es ist demnach sicherzustellen, daß das Rumpfteil 3 in dichte parallele Anlage an den äußeren Randbereich des Unterbodens 15 gelangt, weil die Halteteile 45 und 46 entsprechend zusammenwirken. Im Bereich der Schweißnaht 27 kann das Halteteil 46 mit einer ringsum laufenden Aussparung versehen werden, so daß die Gefahr einer Verschweißung zwischen dem Unterboden 15 und dem Halteteil 46 sicher vermieden wird.

In all den Ausführungsbeispielen nach den Figuren 13 bis 20 zeigt ein umrißhaft wiedergegebener Pfeil in Richtung der Schweißnaht 27 die Richtung des Energiestrahles, insbesondere des parallel gebündelten oder vokussierten Laserstrahles, an.

Figur 15 zeigt prinzipiell eine Vorrichtung mit zwei drehbar gelagerten Rollen, wie sie beispielsweise bei einem Behälter gemäß Figur 4 eingesetzt werden können. Die stirnseitig miteinander zu verbindenden Blechteile werden zumindest im Schweißbereich aneinander gepreßt. Dabei können die Rollen 44 durchaus bis in den Bereich der Schweißnaht 27 geführt werden, ohne daß die Gefahr besteht, daß die Rollenoberflächen mit in den Schmelprozeß einbezogen werden.

Figur 16 zeigt eine andere Art der vorrichtungsmäßigen
Halteteile 47 und 48, die für eine Verbindung der Blechteile gemäß Ausführugnsbeispiel nach Figur 4 eingesetzt
werden können. Das Halteteil 48 ist dabei ein Paßstück,
das den von dem Unterboden 16 gebildeten Hohlraum ausfüllt.
Das Halteteil 47 füllt den Innenraum des Rumpfteiles 4 aus.
Dabei wird wiederum davon ausgegangen, daß der Rumpfteil
als in sich ringsum geschlossenes Teil ausgeführt ist.
Durch die in Pfeilrichtung Aufeinanderzubewegung der Teile
47 und 48 wird eine genaue Positionierung des Unterbodens
16 und des Rumpfteiles 4 erreicht.

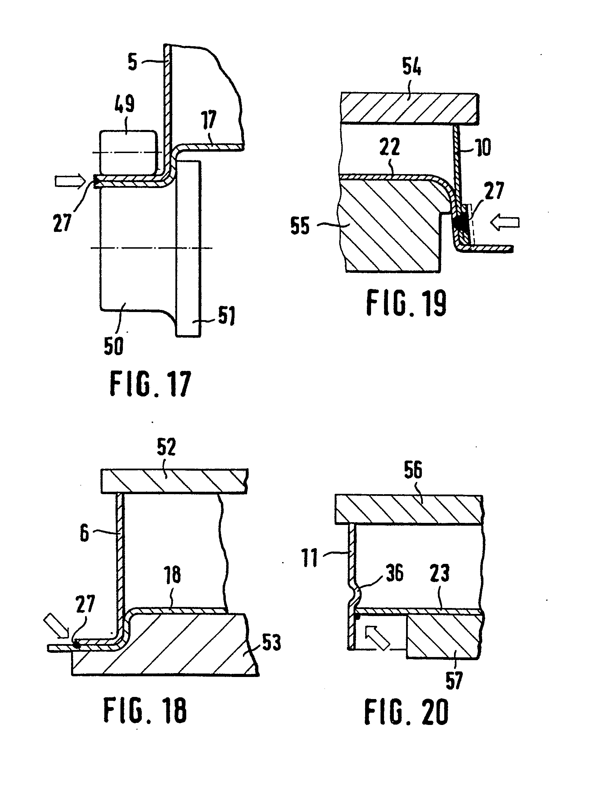

Figur 17 zeigt eine vorrichtungsmäßige Anordnung von Halteilen 49 und 50, wie sie beispielsweise bei der Herstellung eines Behälters gemäß Figur 5 anwendbar ist. Die Teile 49 und 50 sind als Rollen ausgebildet, wobei das an dem
Bodenteil 17 angreifende Halteteil 50 mit einem radial
erweiterten Abschnitt 51 versehen ist, so daß mit Hilfe
dieses Halteteils 50 auch eine Verformung des Unterbodens
17 mit dem Zusammenführen der Behälterteile 5 und 17 einhergehen kann. Die stirnseitige Verschweißung im Bereich
27 der beiden Blechteile wird dadurch unter Zusammenpressung der Teile in dem Schweißbereich sichergestellt.

Figur 18 zeigt eine Ausführungsform der Vorrichtung, wie
sie beispielsweise bei dem Behälter-Ausführungsbeispiel
gemäß Figur 6 angewendet werden kann. In den Unterboden 18
greift dabei voll umfänglich ein erstes Halteteil 53 ein,
das die Abkröpfung im Randbereich mitumfaßt und von daher
auch in der Lage ist, der entsprechenden Verformung des
Bodenteiles 18 zu dienen. Im Zuge der Zusammenführung der
beiden Blechteile, nämlich des Unterbodens 18 und des
Rumpfteils 6, wird mit Hilfe eines Andrücktellers 52 als
anderes Halteteil das Rumpfteil 6 in Anlage zu dem Unterboden 18 zusammengeführt, wie dies Figur 18 erkennen läßt.

Dipl.-Ing. Otto Flügel, Dipl.-Ing. Manfred Säger, Patentanwälte, Cosimastr. 81, D-8 München 81

19

Die nach außen abstehenden Randbereiche werden somit in Parallellage zueinander überführt und liegen im Bereich der Schweißnahtstelle 27 dicht aneinander.

Das Vorrichtungs-Ausführungsbeispiel gemäß Figur 19 eignet sich beispielsweise für Behälterformen, wie sie in den Figuren 10 und 12 wiedergegeben sind, wobei Figur 12 die Verbindung zwischen Rumpfteil und Oberboden zeigt, während Figur 19 die Verbindung des Rumpfteiles 10 mit dem Unterboden 22 wiedergibt. Dies ist lediglich eine Umkehrung. Auch hier wird mit Hilfe eines Halteteils 55, das den gesamten, von dem Bodenteil 22 umgriffenen Raum ausfüllt, dieses paßgenau gehalten, während das in sich geschlossen ausgebildete Rumpfteil 10 mit Hilfe eines Andrücktellers 54 in die außenumfängliche Parallellage mit dem Unterboden 22 überführt wird, worauf in Richtung des Hohlpfeiles die Verschweißung erfolgt. Das den Unterboden 22 haltende Vorrichtungsteil 55 ist dabei umfänglich mit einer Ausnehmung versehen, die den radial inneren Randbereich des Bodenteils 22 freiläßt, so daß im Zuge der Verschweißung keine Schmelzschweiß-Beaufschlagung des Halteteils 55 stattfinden kann. Nach erfolgter Schweißung kann der radial abstehende Randbereich des Unterbodens 22 nach oben hin auf die äußere Mantelfläche des Rumpfteils 10 umgeschlagen werden, wie dies gestrichelt angedeutet ist. Ein solches Umschlagen ist im Rahmen der Figur 12 in Anwendung auf die Verbindung zwischen Rumpfteil und Oberbodenteil dargestellt.

Das Ausführungsbeispiel der angedeuteten Vorrichtung gemäß Figur 20 läßt sich beispielsweise bei einem Behälter gemäß Figur 11 anwenden. Hier wird mit einem unteren Halteteil 57 das scheibenförmige Unterbodenteil 23 nach oben gedrückt, während ein als Andrückteller ausgebildetes Halteteil 56 im oberen Randbereich des Rumpfteiles 11 angreift. Beide Teile werden aufeinanderzu druckbeauf-

Dipl.-Ing. Otto Flügel, Dipl.-Ing. Manfred Säger, Patentanwälte, Cosimastr. 81, D-8 München 81

20

schlagt. Dadurch gelangt der Randbereich des Unterbodenteils 23 in Anlage an die Sicke 36 des Rumpfteiles 11,
so daß die für das Verschweißen in Richtung des Hohlpfeiles 11 erforderliche dichte Anlage zwischen dem Randbereich des Unterteils 23 und dem unteren Fußbereich der
Sicke 36 sichergestellt ist. Das untere Halteteil 47 ist
dabei im Radius kleiner als das scheibenförmige Unterbodenteil 23 ausgeführt, so daß für die Zuführung des Energiestrahles entsprechender Raum verbleibt, wie dies Figur 20 erkennen läßt.

Karl Huber

Verpackungswerke GmbH + Co.

Heilbronner Str. 30

7110 Öhringen

12.904/fl/km

VERFAHREN ZUR HERSTELLUNG EINES BEHÄLTERS AUS DÜNNEM BLECH, WIE DÜNNEREM FEINBLECH UND/ODER FEINSTBLECH

PATENTANSPRÜCHE

1. Verfahren zur Herstellung eines Behälters aus dünnem Blech, insbesondere dünnerem Feinblech und/oder Feinstblech, der aus wenigstens zwei Teilen - beispielsweise Rumpf und Unter- und/oder Oberboden eines dosen- oder kanisterförmigen Behälters - besteht, die mit ihren zu verbindenden Randbereichen unter Bildung eines zumindest teilweise ungerade verlaufenden Verbindungsbereiches zusammengeführt und in diesem Verbindungsbereich dicht und stoßfest miteinander verbunden werden, d a d u r c h  g e - k e n n z e i c h n e t, daß die Randbereiche (25, 26) der Teile (1; ..12, 13; ..24) über den Verbindungsbereich (27) hinweg mit Hilfe wenigstens eines Energiestrahles bis zur Schmelze des Bleches nahtförmig aufgeheizt und dadurch ohne Zufuhr weiteren Schweißmittels miteinander verschweißt werden.

2. Verfahren nach Anspruch 1, d a d u r c h  g e k e n n - z e i c h n e t, daß das Aufheizen der Randbereiche (25, 26) mit Hilfe eines Laserstrahles durchgeführt wird.

-2-

3. Verfahren nach Anspruch 1 oder 2, d a d u r c h  g e -
k e n n z e i c h n e t, daß die Randbereiche (25, 26) der
Teile (1, 13; 4, 16; 5, 17) parallel verlaufend und mit
ihren Endkanten (28, 29) etwa bündig abschließend zusammengeführt werden und daß die Schmelzaufheizung auf die
Stirnseiten (30) der Endkanten (28, 29) mit Zentrum etwa
auf deren gegenseitigen Angrenzungsbereich aufgebracht
wird.

4. Verfahren nach Anspruch 1 oder 2, d a d u r c h  g e -
k e n n z e i c h n e t, daß die Randbereiche (25, 26) der
Teile (3, 15; 8, 20; 9, 21; 10, 22; 12, 24) parallel verlaufend zusammengeführt werden und daß die Schmelzaufheizung von einer der äußeren Breitseiten (31) des zugehörigen Randbereiches (3; 8; 9; 10; 12) ausgehend bis in den
anderen parallel anliegenden Randbereich (15; 20; 21; 22;
24) hinein erfolgt.

5. Verfahren nach Anspruch 1 oder 2, d a d u r c h
g e k e n n z e i c h n e t, daß die Randbereiche (25, 26)
der Teile (6, 18) parallel verlaufend zusammengeführt werden, derart, daß die Endkante (32) des einen Randbereiches
(6) im Breitseitenbereich (33) des anderen Randbereiches
(18) liegt, und daß die Schmelzaufheizung in dem Eckbereich erfolgt, der von der Stirnseite (30) der Endkante
(32) des einen Randbereiches (6) und dem Breitseitenbereich (33) des anderen Randbereiches (18) gebildet wird.

6. Verfahren nach Anspruch 1 oder 2, d a d u r c h  g e -
k e n n z e i c h n e t, daß der Randbereich (26) des einen Teils (23) mit seiner Endkante (34) etwa stumpf stossend an den Breitseitenbereich (35) des Randbereiches (25)
des anderen Teiles (11) zusammengeführt wird und daß die
Schmelzaufheizung in wenigstens einem der Winkelbereiche
erfolgt, die zwischen der Endkante (34) des Randbereiches

-3-

(26) des einen Teils (23) und dem Breitseitenbereich (35) des anderen Teils (25) gebildet werden.


7. Verfahren nach Anspruch 6, d a d u r c h  g e k e n n - z e i c h n e t, daß die Endkante (34) des Randbereiches (26) des einen Boden bildenden einen Teils (23) an einer sickenförmigen Einschnürung (36) des einen Rumpf bildenden anderen Teils (11) anliegend zusammengeführt wird.


8. Verfahren nach einem der Ansprüche 1 bis 7, d a - d u r c h  g e k e n n z e i c h n e t, daß die schmelz- verschweißten Randbereiche (25, 26) der Teile (4, 16; 5, 17) bzw. ein überstehender Teilrandbereich eines der Teile (11; 18; 24) nach der Verschweißung zu einem Wulst (37) oder einem Falz (38) verformt werden bzw. wird.


9. Verfahren nach Anspruch 1 oder 2, d a d u r c h  g e - k e n n z e i c h n e t, daß die Randbereiche (25, 26) der Teile (2, 14) mit den Stirnseiten (30) ihrer Endkanten (28, 29) aneinander stoßend zusammengeführt werden und daß der Energiestrahl von einer der Breitseiten her auf den Stoßbereich (27) aufgebracht wird.


10. Verfahren nach Anspruch 1 oder 2, d a d u r c h  g e - k e n n z e i c h n e t, daß ein drittes Teil (39), insbesondere in Form einer Bandage, die stirnseitig aufeinanderzu gerichtet zusammengeführten Randbereiche (25, 26) der zu verbindenden Teile (7, 19) breitseitig überlappend anliegend zugeführt wird  und daß das dritte Teil (39) jeweils über eine durchgehende Schmelzschweißnaht (27) mit dem einen und mit dem anderen der zu verbindenden Teile (7, 19) verbunden wird.


11. Verfahren nach einem der Ansprüche 1 bis 10, d a - d u r c h  g e k e n n z e i c h n e t, daß der Energie-

Dipl.-Ing. Otto Flügel, Dipl.-Ing. Manfred Säger, Patentanwälte, Co-insstr. 81, D-8 München 81

strahl von dem durch das Rumpfteil (11) umgriffenen Behälterraum bzw. dem durch unter- und/oder oberbodenseitig
vorstehende Rumpfteilabschnitte umgriffenen Raum ausgehend
innenseitig auf den Verbindungsbereich (27) aufgebracht
wird.

12. Verfahren nach einem der Ansprüche 1 bis 11, d a -
d u r c h   g e k e n n z e i c h n e t, daß der Energiestrahl von seiner Quelle aus gesehen über einen Reflektor
umgelenkt auf den Verbindungsbereich aufgebracht wird.

13. Behälter aus dünnem Blech, insbesondere dünnerem Feinblech und/oder Feinstblech, der aus wenigstens zwei Teilen - beispielsweise Rumpf und Unter- und/oder Oberboden
eines dosen- oder kanisterförmigen Behälters besteht -, die
mit ihren einander zugewandten Randbereichen unter Bildung eines zumindest teilweise ungerade verlaufenden Verbindungsbereiches in diesem dicht und stoßfest miteinander verbunden sind, d a d u r c h   g e k e n n z e i c h -
n e t, daß die Randbereiche (25, 26) der Teile (1; ..12,
13; ..24) im Verbindungsbereich (27) mittels wenigstens
einer durch Energiestrahl-Aufheizen gebildeten Schmelzschweißnaht miteinander verbunden sind.

14. Behälter nach Anspruch 13, d a d u r c h   g e k e n n -
z e i c h n e t, daß die Randbereiche (25, 26) der Teile
(1, 13; 4, 16; 5, 17) parallel verlaufend und mit ihren
Endkanten (28, 29) etwa bündig abschließend zusammengeführt sind und daß die Schweißnaht (27) auf die Stirnseiten (30) der Endkanten (28, 29) mit Zentrum etwa in deren
gegenseitigem Angrenzungsbereich aufgebracht ist.

15. Behälter nach Anspruch 13, d a d u r c h   g e k e n n -
z e i c h n e t, daß die Randbereiche (25, 26) der Teile
(3, 15; 8, 20; 9, 21; 10, 22; 12, 24) parallel verlaufend
zusammengeführt sind und daß die Schweißnaht (27) von ei-

0200098

-5-

ner der äußeren Breitseiten (31) des zugehörigen Randbereiches (3; 8; 9; 10; 12) ausgehend bis in den anderen parallel anliegenden Randbereich (15; 20; 21; 22; 24) hineinreichend angeordnet ist.

16. Behälter nach Anspruch 13, d a d u r c h   g e k e n n - z e i c h n e t, daß die Randbereiche (25, 26) der Teile (6, 18) parallel verlaufend zusammengeführt sind, derart, daß die Endkante (32) des einen Randbereiches (6) im Breitseitenbereich (33) des anderen Randbereiches (18) liegt, und daß die Schweißnaht (27) in dem Eckbereich angeordnet ist, der von der Stirnseite (30) der Endkante (32) des einen Randbereiches (6) und dem Breitseitenbereich (33) des anderen Randbereiches (18) gebildet ist.

17. Behälter nach Anspruch 13, d a d u r c h   g e k e n n - z e i c h n e t, daß der Randbereich (26) des einen Teils (23) mit seiner Endkante (34) etwa stumpf stoßend an den Breitseitenbereich (35) des Randbereiches (25) des anderen Teiles (11) angeordnet ist und daß die Schweißnaht (27) in wenigstens einem der Winkelbereiche vorgesehen ist, die zwischen der Endkante (34) des Randbereiches (26) des einen Teils (23) und dem Breitseitenbereich (35) des anderen Teils (25) gebildet sind.

18. Behälter nach Anspruch 17, d a d u r c h   g e k e n n - z e i c h n e t, daß die Endkante (34) des Randbereiches (26) des einen Boden bildenden einen Teils (23) an einer sickenförmigen Einschnürung (36) des einen Rumpf bildenden anderen Teils (11) anliegend angeordnet ist.

19. Behälter nach einem der Ansprüche 13 bis 18, d a - d u r c h   g e k e n n z e i c h n e t, daß die schmelz- verschweißten Randbereiche (25, 26) der Teile (4, 16; 5, 17) bzw. ein überstehender Teilrandbereich eines der Teile

Dipl.-Ing. Otto Flügel, Dipl.-Ing. Manfred Säger, Patentanwälte, Cosimastr. 81, D 8 München 81

-6-

(11; 18; 24) zu einem Wulst (37) oder einem Falz (38) verformt sind bzw. ist.

20. Behälter nach Anspruch 13, d a d u r c h g e k e n n z e i c h n e t, daß die Randbereiche (25, 26) der Teile (2, 14) mit den Stirnseiten (30) ihrer Endkanten (28, 29) aneinanderstoßend zusammengeführt sind und daß die Schweißnaht (27) von einer der Breitseiten her auf den Stoßbereich aufgebracht ist.

21. Behälter nach Anspruch 13, d a d u r c h g e k e n n z e i c h n e t, daß ein drittes Teil (39), insbesondere in Form einer Bandage, die stirnseitig aufeinanderzu gerichtet zusammengeführten Randbereiche (25, 26) der zu verbindenden Teile (7, 19) breitseitig überlappend anliegend zugeführt ist und daß das dritte Teil (39) jeweils über eine durchgehende Schmelzschweißnaht (27) mit dem einen und mit dem anderen der zu verbindenden Teile (7, 19) verbunden ist.

22. Behälter nach einem der Ansprüche 13 bis 21, d a d u r c h g e k e n n z e i c h n e t, daß die Schweißnaht (27) von dem durch das Rumpfteil (11) umgriffenen Behälterraum bzw. dem durch unter- und/oder oberbodenseitig vorstehende Rumpfteilabschnitte umgriffenen Raum ausgehend innenseitig auf den Verbindungsbereich aufgebracht ist.

23. Behälter nach Anspruch 13, d a d u r c h g e k e n n z e i c h n e t, daß die Randbereiche (25, 26) der Teile (1, 13) parallel verlaufend und mit ihren Endkanten (28, 29) etwa bündig abschließend zusammengeführt sind und daß die Schweißnaht 27 auf die radial nach außen gerichtete Stirnseite (30) der radial nach außen abgebogenen Endkante (29) des Teils (13) und die daran anschließende,

-7-

in gleicher Ebene verlaufende Außenmantelfläche des Randbereichs (25) des Teils (1) aufgebracht ist.

24. Vorrichtung zur Durchführung des Verfahrens nach einem der Ansprüche 1 bis 12, g e k e n n z e i c h n e t
d u r c h   zwei gesteuert bewegbare Halteteile (40, 41,
42; 43, 44; 45, 46; 47 48; 49, 50, 51; 52, 53; 54, 55;
56, 57), deren eines an dem einen Blechteil, insbesondere
Behälter-Rumpf (2; 3; 4; 5; 6; 10; 11), und dessen anderes
an dem anderen Blechteil, insbesondere Behälter-Unter-
Oberboden (14; 15; 16; 17; 18; 19; 20; 21; 22; 23; 24),
des dosen- oder kanisterförmigen Behälters angreift und
die die Blechteile zumindest im Bereich der stattfindenden Energiestrahl-Schmelzverschweißung dicht aneinanderliegend spaltfrei zusammenführen.

25. Vorrichtung nach Anspruch 24, d a d u r c h   g e -
k e n n z e i c h n e t, daß die beiden Halteteile (40,
41, 42; 43, 44; 45, 46; 47, 48; 49, 50, 51; 52, 53; 54,
55; 56, 57) in einem Bereich vor der Schweißstelle (27)
an den beiden Blechteilen (2, 14; 3, 15; 4, 16; 5, 17;
6, 18; 7, 19; 8, 20; 9, 21; 10, 22; 11, 23; 12, 24) diese zusammenführend angreifen.

26. Vorrichtung nach Anspruch 24 oder 25, d a d u r c h
g e k e n n z e i c h n e t, daß die beiden Halteteile
(40, 41, 42; 43, 44; 45, 46; 47, 48; 49, 50, 51; 52, 53;
54, 55; 56, 57) die beiden Blechteile (2, 14; 3, 15; 4,
16; 5, 17; 6, 18; 7, 19; 8, 20; 9, 21; 10, 22; 11, 23;
12, 24) an der Schweißstelle (27) in einem bestimmten,
gleichbleibenden Abstand von der Quelle des Energiestrahles zusammenführen bzw. aneinandergedrückt vorbeiführen.

Dipl.-Ing. Otto Flügel, Dipl.-Ing. Manfred Säger, Patentanwälte, Cosimastf. 81, D-8 München 81

8

27. Vorrichtung nach einem der Ansprüche 24 bis 26, d a d u r c h   g e k e n n z e i c h n e t, daß die Halteteile (40, 41, 42; 43, 44; 45, 46; 47, 48; 49, 50, 51; 52, 53; 54, 55; 56, 57) die Blechteile (2, 14; 3, 15; 4, 16; 5, 17; 6, 18; 7, 19; 8, 20; 9, 21; 10, 22; 11, 23; 12, 24) an der ortsfest angeordneten Quelle des Energiestrahles über die Schweißnahtlänge hinweg vorbeiführend angeordnet sind.

28. Vorrichtung nach einem der Ansprüche 24, bis 26, d a d u r c h   g e k e n n z e i c h n e t, daß die Quelle des Energiestrahles an dem mittels der Halteteile (40, 41, 42; 43, 44; 45, 46; 47, 48; 49, 50, 51; 52, 53; 54, 55; 56, 57) spaltfrei zusammengeführten Blechteilen (2, 14; 3, 15; 4, 16; 5, 17; 6, 18; 7, 19; 8, 20; 9, 21; 10, 22; 11, 23; 12, 24) über die Schweißnahtlänge um die Blechteile herumgeführt bewegbar angeordnet ist.

29. Vorrichtung nach einem der Ansprüche 24 bis 28, d a d u r c h   g e k e n n z e i c h n e t, daß die Halteteile (42; 46; 48; 50, 51; 53; 55) wenigstens eines der Blechteile (14; 16; 17; 18; 22; 24) auf die Schweißstelle zu verformend ausgebildet sind.

30. Vorrichtung nach einem der Ansprüche 24 bis 29, d a d u r c h   g e k e n n z e i c h n e t, daß das eine Halteteil (44) das hinsichtlich der Schmelzaufheizungsrichtung äußere Blechteil (4) auf das andere Blechteil (16) zugerichtet hält, während das andere Halteteil (44) in Gegenrichtung der Energiestrahlrichtung auf das andere Blechteil (16) zu druckbeaufschlagend ausgebildet ist.

31. Vorrichtung nach einem der Ansprüche 24 bis 30, d a d u r c h   g e k e n n z e i c h n e t, daß das eine Halteteil (40; 45; 43; 47; 49; 52; 54; 56) den

Dipl.-Ing. Otto Flügel, Dipl.-Ing. Manfred Säger, Patentanwälte, Cosimastr. 81, D-8 München 81

9

umfangsgeschlossen vorgefertigten Behälterrumpf (2; 3; 4; 5; 6; 10; 11) auf das Unter- bzw. Oberbodenteil in Achsrichtung des Rumpfes druckbeaufschlagend ausgebildet ist.

32. Vorrichtung nach einem der Ansprüche 24 bis 30, d a d u r c h   g e k e n n z e i c h n e t, daß die Halteteile unmittelbar im Nahbereich der Schweißstelle (27) an den zu verschweißenden Blechteilen diese zusammenpressend angreifen.

33. Vorrichtung nach einem der Ansprüche 24 bis 32, d a d u r c h   g e k e n n z e i c h n e t, daß wenigstens eines der Halteteile (44; 49, 50) als drehbar gelagerte und gegebenenfalls angetriebene Walze ausgebildet ist.

1 / 5

FIG. 1

FIG. 2

FIG. 5

FIG. 3

FIG. 6

FIG. 4

FIG. 7

FIG. 8

FIG. 10

FIG. 9

FIG. 11

FIG. 12

FIG. 13

FIG. 14

FIG. 15

FIG. 16

FIG. 17

FIG. 18

FIG. 19

FIG. 20